# EUROPEAN PATENT APPLICATION

(11) **EP 1 681 778 A2**
(43) Date of publication of application: **19.07.2006**
(21) Application number: 06000146.8
(22) Date of filing: 04.01.2006
(51) Int. Cl.: H04B 5/00, H04M 1/725

(54) **Attachable near field communication module**

(30) Priority: 17.01.2005 KR 2005004029
(71) Applicant: Samsung Electronics Co., Ltd., Suwon-si, Gyeonggi-Do (KR)
(72) Inventor: Nam, Jang-Hyun, Youngtong-dong Suwon-si Gyeonggi-do (KR); Seol, Dong-Beom, dong Youngtong-gu, Suwon-si, Gyeonggi-do (KR)
(74) Representative: Grünecker, Kinkeldey, Stockmair & Schwanhäusser Anwaltssozietät

(57) **Abstract**

Disclosed is a Near Field Communication (NFC) device that is attachable to a portable wireless terminal as an accessory. In the attachable NFC device, a locking unit is connected with a string to a portable wireless terminal for being jointly carried with the portable wireless terminal and an NFC module is detachably attached to the locking unit. The NFC module is detached from the locking unit and inserted to an external connector portion of the portable wireless terminal for near field communication with other device. The NFC device of the present invention can be jointly carried with the portable wireless terminal as an accessory, thereby preventing the loss of the NFC device. Also, the NFC module is designed as an external device that when it is used is capable of making an electrical connection with the portable wireless terminal, thereby increasing the security and decreasing the size of the portable wireless terminal.

## Description

### BACKGROUND OF THE INVENTION

### 1. Field of the Invention

The present invention relates to a Near Field Communication (NFC) module capable of being attached to a portable wireless terminal, and more particularly, to an attachable NFC module that is coupled with an accessory of a portable wireless terminal and when used is capable of being separated from the accessory.

### 2. Background of the Prior Art

Usage of portable wireless terminals is becoming very common, and the manufacturers are trying to make slim, lightweight, and compact wireless terminals with various functions to satisfy user demand. For example, the portable wireless terminal includes a small-sized camera module to provide a photo-taking function, a MP3 player module to provide a high quality music service, and so on. Though additional components are usually required to be added to the portable wireless terminal to embed these functions, the manufactures are trying to provide these additional functions without increasing the volume and weight of the portable wireless terminal.

An NFC technology is embedded in some of recent portable wireless terminals to provide functions such as credit card payment, P2P networking, and card reader functions. The portable wireless terminal requires additional parts for the NFC function. Particularly, an additional radiator separate from the antenna radiator is required for Radio Frequency (RF) communication with other devices such as a credit card terminal. For example, the portable wireless terminal requires a TAMA (a chip manufactured by Philips Electronics N. V), a smart integrated circuit (IC), an oscillator, passive elements, and a near field radiator operating at a frequency of 13.56 MHz. Generally, the near field radiator is installed in the battery pack of the portable wireless terminal because it has a relatively large size (about 30 x 50 mm).

### SUMMARY OF THE INVENTION

However, embedding the NFC function in the portable wireless terminal increases the size of the portable wireless terminal because additional parts are required. Further, the performance of the near field radiator is degraded due to the metallic material of the battery pack. Still further, a security problem may occur when using the NFC function embedded in the portable wireless terminal.

The present invention provides an attachable NFC module that can be jointly carried with a portable wireless terminal when not used.

Also, the present invention provides an attachable NFC module that can be jointly carried with a portable wireless terminal when it is not used to prevent the loss and damage of the NFC device.

Further, the present invention provides an attachable NFC module that can be jointly carried with a portable wireless terminal to immediately make electrical connection with the portable wireless terminal when a user intends to use the NFC module.

Further, the present invention provides an attachable NFC device that when it is used can be connected to a portable wireless terminal as a module. Therefore, the size of the portable wireless terminal can be reduced because a plurality of NFC components and a near field radiator are not included in the portable wireless terminal.

Further, the present invention provides an attachable NFC device that can be connected to a portable wireless terminal when used and disconnected from the portable wireless terminal when not used to prevent unnecessary operation.

According to an aspect of the present invention, an attachable NFC device includes a locking unit connected with a string to a portable wireless terminal for being jointly carried with the portable wireless terminal; and an NFC module detachably attached to the locking unit, the NFC module being detached from the locking unit and being inserted to an external connector portion of the portable wireless terminal for near field communication with another device.

The NFC module may include a housing defining an inner space; a PCB (Printed Circuit Board) fixed to the inner space of the housing and provided with a plurality of NFC components; an antenna radiator fixed to the inner space of the housing and electrically connected to the PCB; a connector electrically connected to the PCB and installed to partially protruded from a top of the housing for making an electrical connection with an external connecting portion of the portable wireless terminal; and a base plate installed in a bottom of the housing.

According to the present invention, the NFC module can be jointly carried with the portable wireless terminal as an accessory by attaching it to the locking unit. Therefore, the possibility of losing and damaging the NFC module can be reduced. Also, various characters such as a cartoon character can be applied to the shape of the NFC device.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG 1 is a perspective view of a portable wireless terminal provided with an accessory according to the present invention;

FIG 2 is a perspective view of a portable wireless terminal in which an NFC module is detached from an accessory and connected to the portable wireless terminal according to the present invention;

FIG 3 is a perspective view of a locking unit of an accessory according to the present invention;

FIG 4 is a perspective view of an NFC module of an accessory according to the present invention;

FIG 5 is a side sectional view showing an NFC module detached from a locking unit according to the present invention;

FIG 6 is a side sectional view showing an NFC module coupled with a locking unit according to the present invention;

FIG 7 is a cut-away view of an NFC module according to the present invention; and

FIG 8 is a schematic phantom view of an NFC module according to the present invention.

### DETAILED DESCRIPTION OF THE PREFERRED EMBODIMENTS

Reference will now be made in detail to the preferred embodiments of the present invention, examples of which are illustrated in the accompanying drawings. A detail description of well-known features will be omitted for conciseness.

A slide type terminal and an accessory suitable for the slide type terminal are illustrated to describe the present invention. However, the present invention is not limited to the illustrated terminal. The present invention can be applied to various kinds of terminals such as a folder type terminal, a flip type terminal, a bar type terminal, and a Personal Digital Assistant (PDA) that are capable of Near field Communication (NFC).

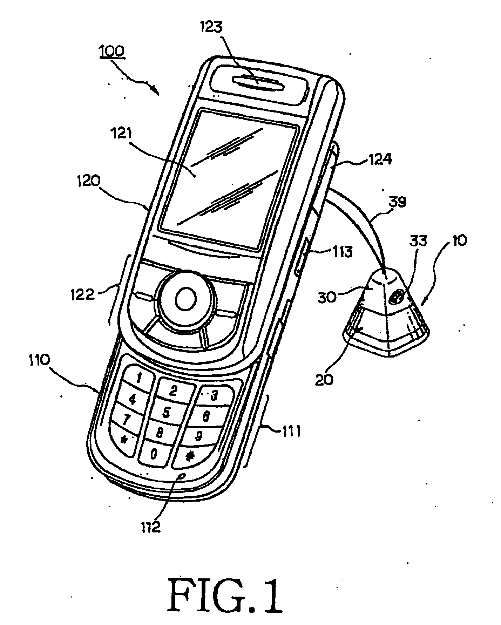

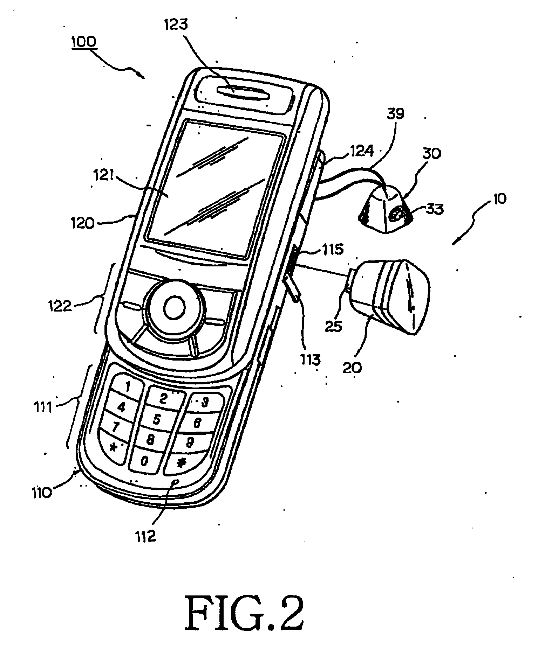

FIG 1 is a perspective view of a portable wireless terminal provided with an accessory according to the present invention, and FIG 2 is a perspective view of a portable wireless terminal in which an NFC module is detached from an accessory and being connected to the portable wireless terminal according to the present invention.

Referring to FIGs. 1 and 2, a portable wireless terminal 100 includes a main body 110 and a slide body 120 capable of sliding on the main body 110 in a length direction of the terminal 100 for opening and closing operations.

The slide body 120 may include a display 121 at a front, a first keypad assembly 122 under the display 121, and an earpiece 123 with a speaker above the display 121. The first keypad assembly 122 may be navigation buttons.

The main body 110 includes a protruded antenna 124. The main body 110 may include a built-in antenna instead of the protruded antenna 124. Also, the main body 110 includes a second keypad assembly 111 on a front lower portion. The second keypad assembly 111 is accessible when the slide terminal is opened. The second keypad assembly 111 may be a 3 x 4 keypad assembly. Further, the main body 110 includes a microphone 112 under the second keypad assembly to receive a user's voice.

An accessory 10 is connected with a string 39 to the portable wireless terminal 100. As is well known to those of skill in the related art, the portable wireless terminal 100 is formed with a portion (not shown) shaped like a ring to which various kinds of accessories can be fastened. For example, one end of a string is tied to the ring shaped portion and the other end of the string is tied to an opening 37 of an accessory, such that the accessory can be carried together with the portable wireless terminal.

In this embodiment, the accessory 10 having a pyramid-like shape is connected with the string 39 to the portable wireless terminal 100. When buttons 33 (only one of two is shown in FIGs. 1 and 2) are pressed, the lower portion of the accessory 10 is separated. That is, the lower portion of the accessory 10 is constructed as an NFC module 20. When separated, the NFC module 20 is connected to the portable wireless terminal 100 through an ear jack 115 as an external NFC module. The upper portion of the accessory 10 is constructed as a locking unit 30 for holding and releasing the NFC module 20. The shape of the accessory 10 is not limited to the illustrated pyramid shape. Various shapes of accessories can be used to detachably hold the NFC module 20.

When not used, the NFC module 20 is attached to the locking unit 30 and carried together with the portable wireless terminal 100 as an accessory. To use the NFC module 20 for electronic payment or the like, a user can detach it from the locking unit 30 by depressing the buttons 33 formed on opposing sides of the locking unit 30, and then the user can electrically connect the NFC module 20 to the portable wireless terminal 100. For the electrical connection with the portable wireless terminal 100, the NFC module 20 is formed with a protruding connector 25 on the surface facing with the locking unit 30. The connector 25 is inserted into the ear jack 115 defined on a side of the portable wireless terminal 100 to electrically connect the NFC module 20 to the portable wireless terminal 100. The ear jack 115 is covered with a cover 113. The user can pull and turn the cover 113 to open the ear jack 115. The NFC module 20 can be electrically connected to the portable wireless terminal 100 through an input/output connector (interface connector, not shown) formed at a bottom of the portable wireless terminal 100, instead of through the ear jack 115, or at other locations, depending on the design of the portable wireless terminal.

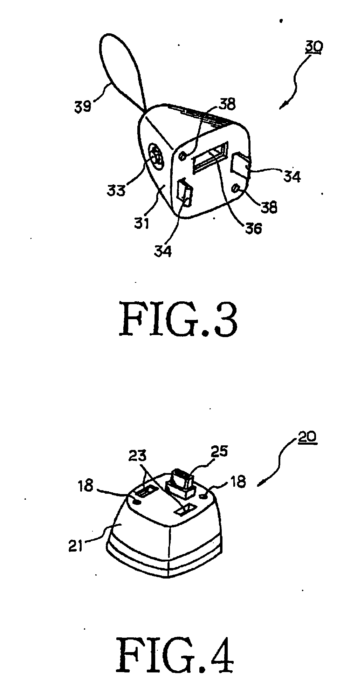

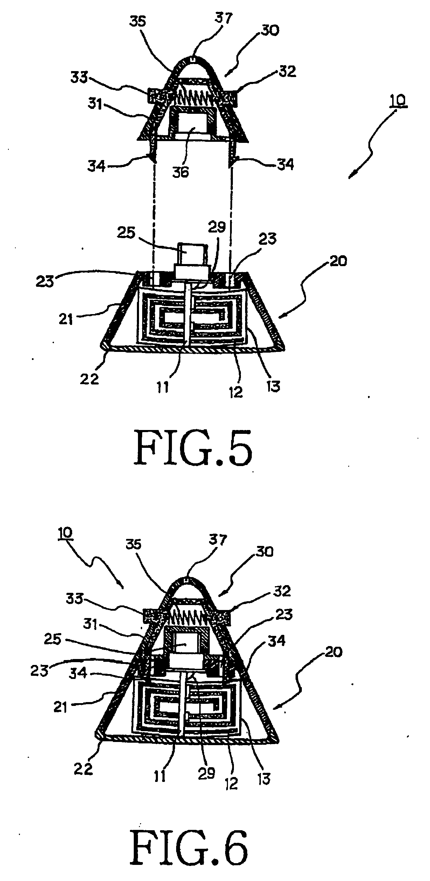

FIG 3 is a perspective view of a locking unit of an accessory according to the present invention. Referring to FIG 3, the locking unit 30 includes a case frame 31, the string 39 at a top of the case frame 31 for connection with the portable wireless terminal 100, two connecting ribs 34 protruded from a bottom of the case frame 31. Free ends of the connecting ribs 34 are respectively shaped like hooks. Also, the locking unit 30 includes the buttons 33 formed on both sides of the case frame 31. When buttons 33 are depressed inwardly, the connecting ribs 34 move inwardly. The buttons 33 and the connecting ribs 34 may be formed in one piece as a locker 32 (FIG 5). The locker 32 will be described later in detail.

When the NFC module 20 is attached to the locking unit 30, the case frame 31 makes contact with the NFC module 20 at its bottom while receiving the connector 25 of the NFC module 20. To receive the connector 25, the case frame 31 defines an insertion hole 36 at its bottom. Also, the case frame 31 is formed with protrusions 38 that are spaced apart from each other. The protrusions 38 are fitted into recesses (refer to 18 in FIG 4) defined at a top of the NFC module 20 for an exact attachment of the NFC module 20 to the locking unit 30, and prevent twisting of the case frame 31 and the NFC module 20 in opposite directions.

FIG 4 is a perspective view of an NFC module of an accessory according to the present invention. Referring to FIG 4, the NFC module 20 includes a housing 21 and the connector 25 protruded from a top of the housing 21. For an operation of the NFC module 20 as an external NFC module of the portable wireless terminal 100, the connector 25 is inserted to the ear jack 115 to make an electrical connection between the NFC module 20 and the portable wireless terminal 100. The housing 21 defines hook holes 23 at a top to receive the connecting ribs 34 of the locking unit 30. When the connecting ribs 34 of the locking unit 30 are inserted in the hook holes 23, the hook-shaped ends of the connecting ribs 34 is held by the wall of the hook holes 23. Also, the housing 21 defines the recesses 18 corresponding to the protrusions 38 of the locking unit 30.

FIG 5 is a side sectional view showing an NFC module detached from a locking unit according to the present invention, and FIG 6 is a side sectional view showing an NFC module coupled with a locking unit according to the present invention.

Referring to FIGs. 5 and 6, the locking unit 30 includes the locker 32 in the case frame 31. The locker 32 includes the connecting ribs 34 at both ends and the buttons 33 at both sides, and it is made of an elastic material with an inverted U-shaped section. The buttons 33 are protruded outwardly through the case frame 31 and they can be returned to their initial positions when released after depressed inwardly owing to the elasticity and inverted U-shape of the locker 32. Also, to prevent the restoring force of the locker 32 from reducing over time, a compression coil spring 35 is disposed between the buttons 33. That is, the compression coil spring 35 forces the connecting ribs 34 outward. Further, the case frame 31 defines the insertion hole 36 at its bottom to receive the connector 25 protruding from the top of the NFC module 20.

The NFC module 20 includes a Printed Circuit Board (PCB) 11 and an antenna radiator 13 for the NFC, which are disposed in the housing 21. PCB 11 and antenna radiator 13 or PCB 11 and connector 25 are connected by an FPC 29. The housing 21 defines the hook holes 23 at the top to receive and hold the hook-shaped ends of the connecting ribs 34 of the locker 32. The bottom of the hosing 21 is opened, and a base plate 22 is attached to the opened bottom of the housing 21. The housing 21 and the base plate 22 may be injection-molded with synthetic resin and they may be coupled with each other through hot melt adhesion process or ultrasonic welding process, as well as other means.

When the NFC module 20 is not used, a user can attach the NFC module 20 to the locking unit 30 connected with the string 39 to the portable wireless terminal 100 (Refer to the accessory 10 in FIGs. 5 and 6). Therefore, the NFC module 20 can be carried together with the portable wireless terminal 100 as an accessory. That is, the NFC module 20 can be attached to the locking unit 30 as shown in FIG 6, and it can be jointly carried with the portable wireless terminal 100 as an accessory as shown in FIG 1.

When the user intended to use the NFC module 20 for electronic payment or other purposes, the user can detach the NFC module 20 from the locking unit 30 by depressing the buttons 33 and pulling down the NFC module 20. After the NFC module 20 is detached from the locking unit 30 as shown in FIG 5, the user can operate the NFC module 20 by connecting it to the portable wireless terminal 100 through the ear jack 115 as shown in FIG 2.

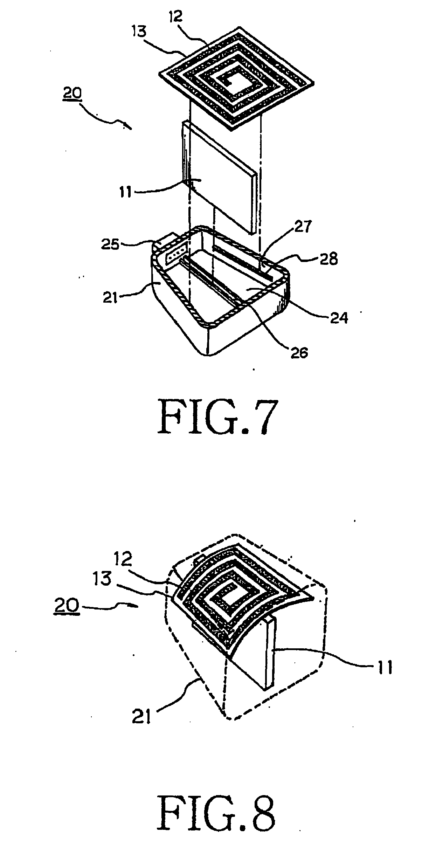

FIG 7 is a cut-away view of an NFC module according to the present invention, and FIG 8 is a schematic phantom view of an NFC module according to the present invention.

Referring to FIGs. 7 and 8, the NFC module 20 includes the PCB 11 fixed to the inside of the housing 21 and the antenna radiator 13 installed in the housing 21 without interference with the PCB 11. Though not shown, the PCB 11 may be mounted with a plurality of components such as a TAMA, a smart IC chip, an oscillator, and passive elements by using a Surface Mount Technology (SMT). The antenna radiator 13 may be formed with a radiation pattern 12 for operating at a low frequency of 13.56 MHz.

To fix the PCB 11, the housing 21 includes uniformly spaced ribs that are protruded from an inner surface 24 to define a groove 26. The PCB 11 is fixed to the inside of the housing 21 by inserting it into the groove 26. Also, other fastening methods can be used to fix the PCB 11 to the inside of the housing 21.

A Flexible Printed Circuit (FPC) is used for the antenna radiator 13. The FPC is formed with the radiation pattern 12 for the NFC operation. The antenna radiator 13, which is made of the FPC, can be flexibly installed in the housing 21. Therefore, the size of the housing 21, necessary for installing the antenna radiator 13 with dimensions of at least 30 x 50 mm, can be reduced because of the flexibility of the antenna radiator. Also, the housing 21 may be formed with at least one support rib 28 at an inner side surface 27 to support one end or both ends of the antenna radiator 13 that is smoothly bent in the housing 21.

Alternatively, other types of antenna radiators such as a metal plate type radiator and a coil type helical radiator may be used for the antenna radiator 13 if the size of the housing 21 is large enough to accommodate them.

As described above, the NFC module of the present invention is designed to be jointly carried with the portable wireless terminal as an accessory, thereby preventing the loss of the NFC module. Also, the NFC module is designed as an external device capable of being electrically connected with the portable wireless terminal when it is used, thereby increasing the security and decreasing the size of the portable wireless terminal.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. An attachable Near Field Communication, NFC, device (10), comprising:
a locking unit (30) connectable to a portable wireless terminal (100) for being jointly carried with the portable wireless terminal; and
an NFC module (20) capable of being attached to the locking unit (30) and capable of being inserted to an external connecting portion (115) of the portable wireless terminal (100) for near field communication with at least one other device.

2. The attachable NFC device of claim 1, wherein the NFC module (20) includes:
a housing (21) defining an inner space;
a Printed Circuit Board, PCB, (11) fixed to the inner space of the housing and provided with a plurality of NFC components;
an antenna radiator (13) fixed to the inner space of the housing (21) and electrically connected to the PCB;
a connector (25) electrically connected to the PCB (11) and installed to partially protrude from a top of the housing (21) for making an electrical connection with said external connecting portion of the portable wireless terminal (100); and
a base plate (22) installed in a bottom of the housing (21) for forming a lower side of the NFC module (20).

3. The attachable NFC device of claim 2, wherein the housing (21) defines a groove (26) having a uniform depth along an inner surface (24) thereof to securely receive the PCB (11).

4. The attachable NFC device of claim 2 or 3, wherein the antenna radiator (13) is made of a Flexible Printed Circuit, FPC, (29).

5. The attachable NFC device of claim 4, wherein the antenna radiator (13) is smoothly bent within the housing (21) without interference with the PCB (11).

6. The attachable NFC device of claim 4 or 5, wherein the housing (21) includes opposing support ribs (28) that are protruded from both inner side surfaces (27) to support both sides of the bent antenna radiator (13).

7. The attachable NFC device of one of the previous claims, wherein the connector (25) and the PCB (11) are electrically connected by an FPC (29).

8. The attachable NFC device of one of the previous claims, wherein the antenna radiator (13) is a plate type metal radiator formed with a pattern (12) by slitting.

9. The attachable NFC device of one of the previous claims, wherein the antenna radiator (13) is a coil type helical antenna radiator

10. The attachable NFC device of one of the previous claims, wherein the housing (21) and the base plate (22) are coupled through at least one of an ultrasonic welding process and a hot melt adhesion process.

11. The attachable NFC device of one of the previous claims, wherein the external connecting portion (115) of the portable wireless terminal (100) is one of an ear jack and an interface connector.

12. The attachable NFC device of one of the previous claims, wherein the locking unit (30) comprises an insertion hole (36) in a surface facing the NFC module (20) to receive the connector (25) of the NFC module when the NFC module is attached to the locking unit.

13. The attachable NFC device of one of the previous claims, wherein the locking unit (30) includes:
a case frame (31); and
a locker (32) installed in the case frame and having a portion protruding from the case frame, the protruding portion being selectively held by a wall of a hook hole defined in the NFC module.

14. The attachable NFC device of claim 13, wherein the locker (32) is inverted U-shaped and includes:
connecting ribs (34) formed at both ends with hook shapes as said protruding portion, the connecting ribs protruding downward through the case frame (31); and
buttons (33) formed at both sides and protruding outwardly through the case frame (31), the buttons being selectively pressed for manipulation of the locker.

15. The attachable NFC device of claim 14, wherein the locker is provided with a compression coil spring (35) disposed therein to provide a force on locker toward an initial position when the locker is depressed.

16. The attachable NFC device of one of the previous claims, wherein the NFC (10) is an accessory with in particular a string (39) adapted for connection to said portable wireless terminal (100).
